# EUROPEAN PATENT SPECIFICATION

(11) **EP 1 760 120 B1**
(45) Date of publication and mention of the grant of the patent: **11.03.2009**
(21) Application number: 06014863.2
(22) Date of filing: 17.07.2006
(51) Int. Cl.: C09D 1/00, C01F 7/02

(54) **Inorganic coating composition, hydrophilic coating and agricultural film**
Anorganische Beschichtungszusammensetzung, hydrophile Beschichtung und landwirtschaftliche Folie
Composition de revêtement inorganique, revêtement hydrophile et pellicule à usage agricole

(30) Priority: 01.09.2005 JP 2005253648
(43) Date of publication of application: 07.03.2007
(73) Proprietor: Asahi Glass Company, Limited, Chiyoda-ku, Tokyo 100-8405 (JP)
(72) Inventor: Kato, Akemi Asahi Glass Company, Limited, Yokohama-shi Kanagawa (JP); Yoneda, Takashige Asahi Glass Company, Limited, Yokohama-shi Kanagawa (JP)
(74) Representative: Müller-Boré & Partner Patentanwälte

(56) References cited:
- US-A- 3 007 878

## Description

The present invention relates to an inorganic coating composition, a hydrophilic coating and an agricultural film.

Substrates made of glass or plastics are excellent in transparency and thus are used for various applications such as covers of various lamps, lenses for eyeglasses, goggles, covers for various meters and agricultural films. However, such substrates usually do not have a high hydrophilicity and thus have a problem that dew condensation or fogging is likely to result. For example, in the case of a cover for a meter which is likely to be always exposed to the outside air, it is likely that dew condensation will take place and fogging will result on the inner surface of the cover, thus leading to a problem such that the display tends to be hardly visible. Further, in the case of an agricultural film, it is likely that the transmittance of sunlight decreases due to e.g. water droplets or fogging, which adversely affects the growth of plants. For these reasons, it is desired to impart hydrophilicity to the substrate surface for the purpose of e.g. improving the anti-fogging property and droplet flowability.

As a method for imparting hydrophilicity to a substrate surface, a method of forming an inorganic layer on the surface is known. Specifically, a method may be mentioned wherein an inorganic coating material containing an alumina sol and a silica sol is applied and dried to form a coating (Patent Document 1). However, this method has had a problem that the coating formed is in such a state that alumina particles and silica particles are bonded on the substrate by a surfactant and thus lacks in the adhesion to the substrate. Further, another method has been proposed wherein an inorganic coating material having the blend ratio of alumina particles and silica particles defined to be specific, is applied and dried to form a coating (Patent Document 2). However, this method has also been inadequate in the abrasion resistance of the coating thereby obtainable, although the antifogging and droplet flowability performance can be obtained to some extent. Further, a method has been also proposed wherein an inorganic coating material containing silica sol and alumina sol, having counter cations such as ammonium ions added as stabilizer, is applied and dried to form a coating (Patent Document 3), whereby it is possible to suppress agglomeration between particles in the inorganic coating composition thereby to stabilize the coating property, but there has still been a problem that it is not possible to simultaneously accomplish the abrasion resistance and the antifogging and droplet flowability of the coating thereby obtainable.

Another document discloses aluminum oxide coated silica core particles, wherein the composite particles are in admixture with alumina particles in an aquasol (Patent Document 4).

Patent Document 1: JP-A-60-69181 (Examples 4 to 6)

Patent Document 2: JP-A-2003-49003 (Examples 1 to 14)

Patent Document 3: JP-A-7-53747 (Examples 1 to 7)

Patent Document 4: US-A-3 007 878 (Example 8)

It is an object of the present invention to provide an inorganic coating composition capable of forming a coating which has high transparency and is excellent in abrasion resistance and adhesion to the substrate and which has excellent effects in the hydrophilicity, or the antifogging property, droplet flowability or antifouling property due to the hydrophilicity, over a long period of time; a hydrophilic coating; and an agricultural film.

The present invention provides an inorganic coating composition capable of forming a hydrophilic coating on a substrate, which comprises alumina particles, of which agglomerated particles in a dispersing medium have an average aspect ratio of from 3 to 20, and have an average particle size in the long-axis direction of from 100 to 500 nm and an average particle size in the short-axis direction of from 2 to 100 nm (hereinafter referred to as the present alumina particles), silica-alumina composite particles, of which agglomerated particles in a dispersing medium have an average particle size (hereinafter referred to as the average agglomerated particle size) of at most 150 nm (hereinafter referred to as the present composite particles), and water, and which has a solid content concentration of from 0.1 to 30 mass%.

According to the present invention, it is possible to obtain an inorganic coating composition capable of forming a coating which has high transparency and is excellent in adhesion to a substrate and which has high hydrophilicity and further is excellent in antifogging properties, antifouling properties and droplet flowability; a hydrophilic coating; and an agricultural film.

Now, the present invention will be described in detail with reference to the preferred embodiment.

The inorganic coating composition of the present invention comprises the present alumina particles, the present composite particles and water.

The present alumina particles are such that agglomerated particles in a dispersing medium have an average aspect ratio of from 3 to 20, and have an average particle size in the long-axis direction of from 100 to 500 nm and an average particle size in the short-axis direction of from 2 to 100 nm. By incorporating the present alumina particles into the inorganic coating composition, it is possible to form a coating which has high hydrophilicity and is excellent in adhesion to a substrate and abrasion resistance, such being desirable. The shape of the present alumina particles may, for example, be a plate-shape, a needle-shape, a fiber-shape or a feather-shape. Among them, ones having a feather-shape are particularly preferred, since the abrasion resistance and the adhesion to a substrate, of the coating thereby obtainable, will be good. By using such feather-shaped particles, particles will be entangled to one another in the coating to become dense, whereby the hardness and the adhesion to a substrate, of the coating thereby obtainable will be higher, and the durability will last for a long period of time. Further, when applied to a flexible substrate such as a film, it shows a relatively flexible nature, such being preferred. The present alumina particles, if the average aspect ratio of agglomerated particles is less than 3, or the average particle size in the long-axis direction is less than 100 nm, a dense coating tends to be hardly obtainable, and the coating strength is likely to be low, such being undesirable. If the average aspect ratio of the agglomerated particles of the present alumina particles exceeds 20, or the average particle size in the long-axis direction exceeds 500 nm, the transparency of the coating thereby obtainable tends to be impaired, or the abrasion resistance tends to be low, such being undesirable. Further, if the average particle size in the short-axis direction is less than 2 nm, the coating thereby obtainable tends to be too dense, whereby the hydrophilicity is likely to be inadequate, such being undesirable, and if the average particle size exceeds 100 nm, the transparency of the coating thereby obtainable tends to be impaired, or the abrasion resistance tends to be low, such being undesirable. It is particularly preferred that the agglomerated particles of the present alumina particles have an average aspect ratio of from 5 to 10, and have an average particle size in the long-axis direction of from 150 to 300 nm, and an average particle size in the short-axis direction of from 5 to 60 nm. In the present specification, the particle size of agglomerated particles in the inorganic coating composition is measured by using a transmission electron microscope (TEM). The present alumina particles are observed as fiber-shaped or feather-shaped particles, when observed by TEM. Whereas, the present composite particles which will be described hereinafter, are observed in a spherical shape and thus are different in the shape. Therefore, even when the inorganic coating composition is used as it is, the present alumina particles and the present composite particles can be distinguished by their TEM images. As a measuring method, the inorganic coating composition of the present invention may be diluted with water to a solid content concentration of about 0.1 mass%, and then it is dropped on a collodion film and dried, whereupon the TEM observation is carried out. In the present invention, the particle size means a particle diameter of a particle observed, and the average particle size is defined as an average value of 20 particles randomly selected. In the present specification, by such a method, the average particle size of particles in the long-axis direction, and the average particle size of particles in the short-axis direction, are calculated. Further, with respect to the average aspect ratio, an average value per article is calculated in a case where it is represented by the aspect ratio = the particle size in the long-axis direction/the particle size in the short-axis direction. Further, as the apparatus to observe the TEM images, JEM-1230 manufactured by JEOL Ltd., may, for example, be mentioned.

Further, as the present alumina particles, ones having various crystal structures may be used, and they may be at least one member selected from the group consisting of α-alumina, gibbsite, bialite, boehmite, γ-alumina and amorphous alumina. Among them, the present alumina particles are particularly preferably amorphous, since the coating thereby obtainable will have good transparency. The present alumina particles may be ones which are commercially available, or ones which are obtainable by a conventional production method. Particularly, the present alumina particles are preferably ones obtained by a method for producing an alumina sol. For example, there may be mentioned a method wherein a hydrate gel obtained by mixing an alkali metal aluminate, an acidic aluminum salt such as aluminum chloride, aluminum nitrate or aluminum sulfate, and, as the case requires, an acidic solution, is aged and then peptized by an addition of an acid, a method wherein a hydrate gel obtained by ion exchange of an acidic aluminum salt, is aged and then peptized, or a method wherein an aluminum alkoxide is hydrolyzed and then peptized.

The present composite particles are particles obtained by combining silica and alumina. By using the present composite particles, they are free from agglomeration with the present alumina particles, and it is possible to obtain an inorganic coating composition which can be stored in a stabilized state for a long period of time, and further it is possible to form a coating having high hydrophilicity and high abrasion resistance, such being preferred. As the present composite particles, conventional ones may suitably be used. Among them, agglomerated particles comprising silica and alumina, obtainable by a method of gradually adding an aluminum salt showing an acidity when dissolved in water, to a silica sol containing silica particles, are preferred. The present composite particles obtained by such a method are preferred, since they are easy to handle and obtainable in a state of a sol dispersed in a dispersing medium.

The present composite particles are required to have an average agglomerated particle size of at most 150 nm, whereby in the coating thereby obtainable, the present composite particles are packed at a high density, so that the abrasion resistance of the coating will be improved. If the average agglomerated particle size exceeds 150 nm, they tend to be hardly packed at a high density in the coating, and the abrasion resistance of the coating thereby obtainable tends to be low, such being undesirable. The present composite particles particularly preferably have an average particle size of from 2 to 120 nm, and most preferably have an average agglomerated particle size of from 30 to 100 nm.

The present composite particles preferably have an Al/Si atomic ratio of from 0.001 to 0.1, whereby when an inorganic coating composition is prepared, the surface of the present composite particles will be positively charged, and accordingly, even if they are mixed with the present alumina particles similarly positively charged, agglomeration tends to hardly take place, whereby a coating excellent in transparency can be obtained, such being desirable. If the Al/Si atomic ratio is less than 0.001, they are likely to agglomerate with the present alumina particles and precipitate, at the time of preparing an inorganic coating composition, and further, the hydrophilicity or the haze of the coating thereby obtainable tends to deteriorate, such being undesirable. Further, if the Al/Si atomic ratio exceeds 0.1, the abrasion resistance of the coating thereby obtainable is likely to be low, such being undesirable. The Al/Si atomic ratio is particularly preferably from 0.01 to 0.1.

In the inorganic coating composition, the present composite particles are preferably in a state of a sol dispersed in a dispersing medium. The composite state of silica and alumina of the present composite particles in the inorganic coating composition, can be assumed by a measurement of the zeta-potential. A silica surface is usually negatively charged, and the zeta-potential is negative within a wide pH range. However, when combined with alumina, it turns to be a cation, and the surface charge will be positive. Accordingly, the zeta-potential becomes positive. The zeta-potential of the present composite particles in a dispersing medium is preferably at least +10 mV, whereby the present composite particles will have a proper stability in the sol, such being desirable.

In the present invention, the proportions of the present alumina particles and the present composite particles in the inorganic coating composition are preferably such that per 100 parts by mass of the total solid content, the present alumina particles are from 20 to 80 parts by mass, and the present composite particles are form 20 to 80 parts by mass. If the present alumina particles are less than 20 parts by mass, the droplet flowability or the adhesion to the substrate of the coating thereby obtainable, is likely to be low, such being undesirable, and if they exceed 80 parts by mass, the strength of the coating thereby obtainable tends to be low, and the transparency is also likely to be low, such being undesirable. Further, if the present composite particles are less than 20 parts by mass, the coating strength is likely to be low, such being undesirable, and if they exceed 80 parts by mass, the droplet flowability or the adhesion to the substrate is likely to deteriorate, such being undesirable. The present alumina particles are particularly preferably from 40 to 60 parts by mass, and the present composite particles are particularly preferably from 40 to 60 parts by mass.

The inorganic coating composition of the present invention is preferably such that the average pore radius, the pore volume and the specific surface area of a xerogel powder obtainable by removing the solvent from the coating composition, are large, whereby the coating thereby obtainable will form a porous layer and becomes highly hydrophilic, such being preferred.

The inorganic coating composition of the present invention contains water. In the inorganic coating composition, the water plays a role as a dispersing medium to disperse the present alumina particles and the present composite particles, whereby the present alumina particles and the present composite particles can be dispersed stably, such being desirable. The content of water is preferably from 100 to 100,000 parts by mass, per 100 parts by mass of the total solid content in the inorganic coating composition. If the content of water is less than 100 parts by mass, the inorganic coating composition tends to be highly concentrated, whereby the stability during the storage for a long period of time is likely to deteriorate, such being undesirable. If the content exceeds 100,000 parts by mass, the liquid tends to be of a low concentration, whereby it tends to be difficult to obtain a required coating thickness, such being undesirable. The content of water is particularly preferably from 500 to 5,000 parts by mass, most preferably from 500 to 2,500 parts by mass, per 100 parts by mass of the total solid content in the inorganic coating composition.

The inorganic coating composition of the present invention may contain a surfactant as the case requires, whereby the coating property will be improved so that a homogeneous coating having a good appearance can be obtained, and the hydrophilicity will also be improved, such being desirable. As such a surfactant, any one of nonionic surfactant, a cationic surfactant, an amphoteric surfactant and a nonionic surfactant may be used. Among them, a nonionic surfactant is particularly preferred, since it is thereby possible to improve the dispersion stability of the present alumina particles and the present composite particles in the inorganic coating composition.

As such a nonionic surfactant, preferred is, for example, a compound having at least one type of structural units selected from the group consisting of -CH₂CH₂CH₂O-, -CH₂CH₂O-, -SO₂-, -NR-(wherein R is a hydrogen atom, or an organic group), -NH₂, -SO₃Y and -COOY (wherein Y is a hydrogen atom, a sodium atom, a potassium atom or an ammonium group), and it may, for example, be an alkylpolyoxyethylene ether, an alkylpolyoxyethylene-polypropylene ether, a fatty acid polyoxyethylene ester, a fatty acid polyoxyethylene sorbitan ester, a fatty acid polyoxyethylene sorbitol ester, an alkylpolyoxyethylene amine, an alkylpolyoxyethylene amide or a polyether-modified silicone surfactant. Further, it may be a surfactant having hydrogen atoms in the alkyl group moiety of the above surfactant substituted by fluorine atoms.

In the inorganic coating composition of the present invention, the surfactant is preferably at most 15 parts by mass per 100 parts by mass of the total solid content in the inorganic coating composition. If the surfactant exceeds 15 parts by mass, the abrasion resistance of the coating thereby obtainable is likely to be low, such being undesirable. The surfactant is particularly preferably from 1 to 10 parts by mass.

The inorganic coating composition in the present invention may contain, as a binder, a precursor of various metal oxides, as the case requires, and a precursor of e.g. an oligomer of silica or alumina is particularly preferred. As a precursor of silica or alumina, one obtainable by various methods may optionally be used. For example, a silica precursor may, for example, be one obtainable by a method of hydrolyzing a silicic acid alkoxide such as ethyl silicate, a method of decomposing an alkali metal silicate by an acid, followed by electrolytic dialysis, a method of peptizing an alkali metal silicate, or a method of dialyzing an alkali metal silicate by an ion exchange resin. Further, as the alumina precursor, it is possible to employ one obtained by a method of hydrolyzing an aluminum alkoxide, a watersoluble aluminum salt or an aluminum chelate compound. The content of the binder is not particularly limited, but it is preferably at most 10 parts by mass as calculated as SiO₂ or Al₂O₃, per 100 parts by mass of the total solid content in the inorganic coating composition. If the content of the binder exceeds 10 parts by mass, it is likely that the flexibility of the coating thereby obtainable tends to be low, and coating is likely to have cracks and is likely to be peeled, and thus the durability is likely to deteriorate, such being undesirable.

The inorganic coating composition in the present invention may contain various metal oxide particles other than the present alumina particles or the present composite particles, as the case requires. For example, it is preferred to incorporate cerium oxide particles, whereby an ultraviolet-screening property may be imparted, to incorporate titanium oxide particles whereby an ultraviolet-screening property or a photocatalytic property may be imparted, or to incorporate particles of e.g. indium-doped tin oxide (ITO), antimony-doped tin oxide (ATO) or tin oxide whereby an electroconductivity or an infrared-screening property may be imparted. It is particularly preferred to incorporate alumina particles or silica particles, whereby not only the hydrophilicity and the droplet flowability of the coating can further be improved, but also the coating strength can be improved. Silica particles are particularly preferred. The average particle size of the metal oxide particles is preferably from 1 to 500 nm, although it depends upon the shape of the particles. If the average particle size is less than 1 nm, the particles tend to be too small, whereby the properties which the metal oxide particles have, tend to be hardly obtainable, such being undesirable. If the average particle size exceeds 500 nm, the transparency of the coating thereby obtainable tends to be impaired, such being undesirable. The metal oxide particles are particularly preferably ones having an average particle size of from 1 to 200 nm. Further, in a case where the metal oxide particles are silica particles, the average particle size is preferably from 2 to 80 nm, particularly preferably from 2 to 50 nm. The metal oxide particles are preferably incorporated in an amount of from 1 to 30 parts by mass per 100 parts by mass of the total solid content in the inorganic coating composition.

Further, the inorganic coating composition of the present invention may contain a hydrophilic polymer as the case requires. It is thereby possible to improve the strength and water absorbing property of the coating thereby obtainable. Such a hydrophilic polymer may, for example, be a polyacrylic acid, a polyvinyl alcohol, a polybutyral, polyurethane or cellulose. The hydrophilic polymer is preferably incorporated in an amount of at most 30 parts by mass per 100 parts by mass of the total solid content in the inorganic coating composition. If the content of the hydrophilic polymer exceeds 30 parts by mass, the durability of the hydrophilicity or the abrasion resistance tends to be low, such being undesirable. The hydrophilic polymer is particularly preferably incorporated in an amount of at most 20 parts by mass per 100 parts by mass of the solid content in the inorganic coating composition.

The inorganic coating composition of the present invention may contain various organic solvents within a range not to impair the dispersion stability of the present alumina particles or the present composite particles. Such organic solvents may, for example, be methanol, ethanol, n-propanol, isopropanol, n-butanol, isobutanol, sec-butanol, t-butanol and ethylene glycol.

The inorganic coating composition of the present invention may contain an additive such as a coloring dye, a pigment, an ultraviolet absorber or an antioxidant, as the case requires.

The solid content concentration in the inorganic coating composition of the present invention is preferably within a range of from 0.1 to 30 mass%. If the solid content concentration is less than 0.1 mass%, when the inorganic coating composition is applied on a substrate, unevenness is likely to result, or the performance of e.g. hydrophilicity may not be obtained, such being undesirable. If the solid content concentration exceeds 30 mass%, the operation efficiency in coating tends to be poor, and the transparency of the coating thereby obtainable tends to be low, and further, the stability as the inorganic coating composition tends to be low, and the storage stability is likely to deteriorate, such being undesirable. The solid content concentration in the inorganic coating composition is particularly preferably from 0.1 to 10 mass%.

As a method for producing inorganic coating composition of the present invention, it is preferred to produce it by mixing, as raw materials, an alumina sol containing alumina particles and a silica-alumina composite sol containing silica-alumina composite particles. At the time of producing the inorganic coating composition, it is preferred to mix water or various organic solvents such as methanol, as the case requires.

The alumina sol being a raw material preferably contains anions derived from an organic acid or inorganic acid, such as chlorine ions, sulfuric acid ions or acetic acid ions in the alumina sol, in order to stabilize the alumina particles in the dispersing medium. The concentration of such anions is preferably such that the anions are at most 35 parts by mass per 100 parts by mass as calculated as A1 in the alumina sol. If the anion concentration exceeds 35 parts by mass, the water resistance or the droplet flowability of the coating thereby obtainable is likely to be low, such being undesirable. Therefore, if the anion concentration in the alumina sol is high, it is advisable to lower the anion concentration by means of an ion exchange resin, electrodialysis, ultrafiltration or the like.

Further, the alumina sol preferably has a pH of from 4 to 6.8, whereby a coating excellent in water resistance and transparency can be obtained, such being desirable. If the alumina sol has a pH of less than 4, the anions tend to be too many, whereby the water resistance of the coating thereby obtainable tends to be poor, such being undesirable. If the pH exceeds 6.8, the alumina sol tends to be agglomerated to have a large particle size, whereby the transparency, the adhesion to the substrate and the abrasion resistance, of the coating thereby obtainable, tend to be low, such being undesirable. The alumina particles in the alumina sol are preferably such that the agglomerated particles in the dispersant have an average aspect ratio of at least 3, an average particle size in the long-axis direction of from 100 to 500 nm and an average particle size in the short-axis direction of from 2 to 100 nm. Further, the alumina sol preferably has a solid content concentration of from 0.1 to 30 mass%, and the solid content concentration is particularly preferably from 0.1 to 10 mass%.

The silica-alumina composite sol being a raw material preferably has a pH of from 3 to 7. If the pH is less than 3, the alumina is likely to be dissolved, such being undesirable. If the pH exceeds 7, the silica-alumina composite particles are likely to be agglomerated, such being undesirable. The silica-alumina composite sol has particularly preferably a pH of from 3.5 to 6, most preferably a pH of from 3.7 to 5. The silica-alumina composite particles in the silica-alumina composite sol preferably has an average particle size of the agglomerated particles in the dispersing medium of at most 150 nm. Further, the silica-alumina composite sol preferably has a solid-content concentration of from 0.1 to 45 mass%.

By coating a substrate with the inorganic coating composition of the present invention, it is possible to form a hydrophilic coating. As the substrate, various types may be employed as the case requires, and a glass substrate or an organic substrate made of e.g. a polyethylene terephthalate, acrylic resin, polycarbonate or fluorocarbon resin may, for example, be mentioned. Particularly preferably, the substrate is made of a fluorocarbon resin, whereby the substrate surface is likely to be negatively charged, whereby a firm coating can be obtained. To the substrate, surface-pretreatment may be applied as the case requires. The wettability of the substrate will thereby be improved, whereby the adhesion of the coating thereby obtainable, to the substrate, can be improved, such being desirable. The surface treatment method is not particularly limited, but conventional discharge treatment such as plasma treatment, corona treatment, UV treatment or ozone treatment, chemical treatment employing an acid or alkali, or physical treatment employing an abrasive material, may, for example, be mentioned. The hydrophilicity of the coating thereby obtainable can be evaluated by the contact angle to water. The coating thereby obtainable preferably has a contact angle to water of not more than 30°. If the contact angle exceeds 30°, the hydrophilicity of the coating thereby obtainable tends to be inadequate, such being undesirable. The contact angle is particularly preferably not more than 20°, most preferably not more than 10°.

The coating obtainable by the coating with the inorganic coating composition of the present invention is preferred, since it is thereby possible to obtain one excellent in transparency. Especially when the substrate is transparent, it is preferably employed. The transparency can be evaluated by a haze value. The haze value of the obtained coating is preferably not more than 5% by the difference from the substrate. If the haze value exceeds 5%, the transparency of the coating tends to be poor, such being undesirable. The haze value of the coating thereby obtainable is particularly preferably not more than 2% by the difference from the substrate.

The inorganic coating composition of the present invention may be applied by a known method, such as brush coating, roller coating, manual coating, rotational coating, dip coating, coating by various printing systems, bar coating, curtain flow coating, die coating, flow coating or spray coating. Further, for the purpose of increasing the mechanical strength of the coating, heating or irradiation with ultraviolet rays or electron rays may be carried out, as the case requires. The heating temperature may be determined taking the heat resistance of the organic substrate into consideration. For example, in the case of a fluorocarbon resin film, it is preferably from 40 to 100°C.

In the present invention, the thickness of the coating to be obtained is preferably from 10 to 3000 nm. If the thickness of the coating is less than 10 nm, the hydrophilicity or the durability thereof tends to be low, such being undesirable. If the thickness of the coating exceeds 3,000 nm, cracks are likely to result or interference fringes are likely to form, and in a case where the coating has flaws, such flaws tend to be distinctly observed, such being undesirable. The thickness of the coating is particularly preferably from 50 to 1,000 nm.

The coating obtainable by the present invention may be used as a hydrophilic primer layer. In such a case, on the obtainable coating, another coating may further be formed. For example, on a coating obtainable by using the inorganic coating composition of the present invention, it is preferred to form a photocatalytic coating containing fine particles made of anatase-type titanium oxide, rutile-type titanium oxide, tin oxide, zinc oxide, tungsten trioxide, ferric oxide or strontium titanate, whereby, when the substrate is a plastic, it is possible to suppress deterioration by decomposition.

A hydrophilic coating obtainable by using the inorganic coating composition in the present invention, is preferably used for an agricultural film. Such an agricultural film preferably has the hydrophilic coating on at least one side of a substrate. Further, in a case where the hydrophilic coating is formed on one side, it is possible to form an antifouling coating, an antistatic coating, a heat insulating coating, an ultraviolet-screening coating or the like on the other side.

### EXAMPLES

Now, Examples (Examples 1 to 4, 7 to 11 and 14 to 23) and Comparative Examples (Examples 5, 6, 12 and 13) will be shown. Hereinafter, mass % will be represented simply by %, unless otherwise specified. In these Examples, the particle sizes of the agglomerated particles in the inorganic coating composition were measured by using JEM-1230, manufactured by JEOL Ltd. as a TEM apparatus. With respect to the measuring method, the inorganic coating composition was diluted with water to a solid content concentration of about 0.1%, then dropped on a collodion film and dried, whereupon the TEM observation was carried out. In a unit area (1.5 µm × 1µm) of the obtained TEM image, 20 particles were randomly selected and measured, and with respect to alumina particles and silica-alumina composite particles, the average particle sizes were respectively calculated.

### EXAMPLE 1

An alumina sol (Trade Name: Alumina Sol 200, manufactured by Nissan Chemical Industries, Ltd., amorphous, particle shape: feather-shape, average aspect ratio: 10, average particle size in the long-axis direction: 100 nm, average particle size in the short-axis direction: 10 nm, Al₂O₃ concentration: 10.9%, pH 4.8, CH₃COOH concentration: 3%, Cl concentration: 150 ppm, the respective values being catalogue values, the same applies with respect to all of the following products) was diluted to a solid content concentration of 6% by an addition of water. Then, 2.5 g of a strongly basic anion exchange resin (Trade Name: SA10AOH, manufactured by Mitsubishi Chemical Corporation) was added thereto, followed by stirring at room temperature for 10minutes for demineralization. Then, the ion exchange resin was removed by filtration to obtain an alumina sol A (pH 6.1, CH₃COOH concentration: 1%, content of acetic acid ions per 100 parts by mass of alumina particles: 17 parts by weight).

Then, 7.67 g of a polyaluminum chloride aqueous solution (Trade Name: TAKIBINE #1500, manufactured by Taki Chemical Co., Ltd, Al₂O₃ concentration: 23.5%, Cl concentration: 8.1%, basicity: 84% (by JIS K1475)) and 72.4 g of water were mixed and heated to a temperature of 40°C with stirring. Then, 119.9 g of a silica sol (Trade Name: CATALOID SI-45P, manufactured by Catalysts & Chemicals Industries Co., Ltd., SiO₂ concentration: 40.2%, Na₂O concentration: 0.4%) was added and mixed thereto at a rate of 9 g/min. After completion of the addition, the mixture was further aged for one hour with stirring, while the temperature was maintained at 40°C, and then water was added to obtain a silica-alumina composite sol a (Al/Si atomic ratio: 0.04) containing silica-alumina composite particles and having a solid content concentration of 6%. The average agglomerated particle size of the silica-alumina composite particles in the obtained silica-alumina composite sol a was 60 nm. Further, the average agglomerated particle size of the silica-alumina composite particles was measured by a dynamic light scattering grain size analyzer (Trade Name: Microtrac UPA, manufactured by NIKKISO CO.,LTD.).

Then, 25 g of the alumina sol A, 25 g of the silica-alumina composite sol a and 50 g of methanol were mixed and then, a nonionic surfactant (Trade Name: Adekatol SO-145, manufactured by ADEKA CORPORATION) was added so that it would be 3 parts by mass per 100 parts by mass of the total solid content in the inorganic coating composition, to obtain an inorganic coating composition having a solid content concentration of 3%. Here, in the obtained inorganic coating composition, the agglomerated particles of alumina particles had an average aspect ratio of 7, an average particle size in the long-axis direction of 200 nm and an average particle size in the short-axis direction of 30 nm, and the average agglomerated particle size of the silica-alumina composite particles was 70 nm. Further, per 100 parts by mass of the total solid content in the obtained inorganic coating composition, the contents of alumina particles, silica-alumina composite particles and water were 50 parts by mass, 50 parts by mass and 1,570 parts by mass, respectively.

2 ml of the obtained inorganic coating composition was applied by a bar coater onto a corona discharge-treated ETFE film having a size of A4 (Trade Name: AFLEX, manufactured by Asahi Glass Company, Limited, surface wettability index after the corona discharge treatment: 42, thickness: 100 µm) and then dried at 80°C for 5 minutes to form a coating having a thickness of 0.3 µm. Here, with respect to the thickness of the coating, the coating on a sample was scraped off by a cutter, and the thickness was measured by a feeler method.

Hereinafter, also with respect to a sample having a coating formed, the evaluations were carried out by the following methods. The evaluation results are shown in Table 1. Also in Examples 2 to 23, using the obtained inorganic coating compositions, the operation and evaluations were carried out in the same manner as in Example 1. The evaluation results are also shown in Table 1.

### EVALUATION RESULTS

Appearance: The appearance of the coating of a sample was visually evaluated, whereby one having none of foreign matter defects, warping, cracking and unevenness, was identified by ○, and one having at least one of such defects, was identified by ×.

Transparency: The evaluation was carried out by the haze value. The haze was measured and evaluated in accordance with JIS K-7105. The haze value of the coating of a sample was measured by a haze computer (Model: HGM-3DP, manufactured by SUGA TEST INSTRUMENTS). One having a haze value of not more than 5% was regarded as "acceptable", and one having a haze value exceeding 5% was regarded as "unacceptable".

Transmittance: The total light transmittance of a sample was measured by a haze meter (Trade Name: HGM-2K, manufactured by SUGA TEST INSTRUMENTS, SM color computer model SM-5) in accordance with JIS K-7105 (1981).

Hydrophilicity: The evaluation was carried out by the contact angle to water, of the coating on a sample. The contact angle to water at the surface of the coating, was measured by a contact angle meter (Model: CA-X150, manufactured by Kyowa Interface Science Co., Ltd.). The measurement was carried out at optional five different portions, and the average value was calculated.

Water resistance: A sample was vertically immersed in a beaker filled with distilled water of 25°C for 5 minutes and then dried at 80°C for 5 minutes whereupon Al deposits amounts (µg/cm²) at the potion immersed in water and at a non-treated potion, were measured by fluorescent X-rays (Model: RIX3000, manufactured by RIGAKU KK), and the water resistance was evaluated by the amount of Al after the test/the initial amount of Al (%). An Al-deposit amount being at least 90% based on the initial amount, was regarded as "acceptable".

Low temperature droplet flowability: On a constant temperature water tank installed in an environmental test room having a constant temperature, a roof-type frame made of an acrylic resin was installed with an inclination of 15° to the horizontal plane, on this frame, a sample cut out in a size of 14 cm × 8 cm was set so that the coating was located on the lower side. At that time, the environmental test room was set to be 10°C, and the constant temperature water tank was set to be 20°C. And, the appearance of water drops at the surface of the coating was observed and evaluated by the following standards:
⊚: After one hour from the initiation of the evaluation, the surface of the coating is uniformly wet.
○: After two hours from the initiation of the evaluation, the surface of the coating is uniformly wet.
△: After three hours from the initiation of the evaluation, the surface of the coating is uniformly wet.
×: After three hours from the initiation of the evaluation, deposition of water drops is observed partially at the surface of the coating.
××: After three hours from the initiation of the evaluation, water drops are deposited and fogged whitely over the entire surface of the coating.
⊚,○,△ are regarded as "acceptable", and × and ×× are regarded "unacceptable".

High temperature droplet flowability: The operation was carried out in the same manner as in the evaluation of the low temperature droplet flowability. The environmental test room was adjusted to be 20°C, the constant temperature water tank was adjusted to be 80°C, and the sample was left to stand for three months. After expiration of three months, the appearance of water drops at the surface of the coating of the sample was observed and evaluated by such standards that a case where the surface of the coating is uniformly wet, was identified by ⊚, a case where the surface of the coating is wet, but a trace of water flow is partially observed, is identified by ○, a case where water drops are partially deposited on the surface of the coating, is identified by △, and a case where water drops are deposited and fogged whitely over the entire surface of the coating, is identified by ×. ⊚, ○ and △ are regarded as "acceptable", and × is regarded as "unacceptable".

Accelerated weather resistance: A sample was subjected to an accelerated weather resistance exposure evaluation by the following exposure cycle by means of a super UV apparatus (Trade Name: EYE·UV TESTER, manufactured by IWASAKI ELECTRIC Co., Ltd.), and the contact angle after an exposure time of about 1,000 hours (83 cycles) was measured and evaluated in the same manner as in the evaluation of hydrophilicity. One having a contact angle of not more than 30° regarded as "acceptable".

Exposure cycle in the accelerated weather resistance test: A sample was irradiated for 10 hours with an irradiation intensity of 100 mW/cm² in an environment where the temperature was 63°C, and the humidity was from 4 to 7%, then washed with water for 20 seconds, subjected to dew condensation for 2 hours in an environment where the temperature was 30°C and the humidity was 100% and then washed with water for 20 seconds.

Abrasion resistance: A sample was set on a flat surface-rubbing tester (Model: TESTER SANGYO AB-301 COLOR FASTNESS RUBBING TESTER, manufactured by Coating Tester Industry KK), and Bencot (Trade Name: BEMCOT M-1, manufactured by Asahi Kasei Corporation.) was attached as an abrasion material, whereupon an abrasion test was carried out under such conditions that the load was 200 g, the contact area was 15 mm × 20 mm, and the number of rubbing times being one reciprocation, and the A1 deposit amounts (µg/cm²) before and after the test were measured by fluorescent X-rays (Model: RIX3000, manufactured by Rigaku KK) whereby the abrasion resistance was evaluated by the amount of Al after the test/the initial amount of Al(%). One wherein Al deposit amount was at least 70% based on the initial amount, was regarded as "acceptable".

### EXAMPLE 2

An operation was carried out in the same manner as in Example 1 except that instead of methanol, 50 g of water was used to obtain an inorganic coating composition. In the obtained inorganic coating composition, the agglomerated particles of alumina particles had an average aspect ratio of 7, an average particle size in the long-axis direction of 200 nm and an average particle size in the short-axis direction of 30 nm, and the average agglomerated particle size of the silica-alumina composite particles was 70 nm. Further, the content of water was 3,230 parts by mass, per 100 parts by mass of the total solid content in the obtained inorganic coating composition.

### EXAMPLE 3

An operation was carried out in the same manner as in Example 1 except that instead of methanol, a mixed liquid of 20 g of water and 30 g of ethanol was used, to obtain an inorganic coating composition. In the obtained in organic coating composition, the agglomerated particles of alumina particles had an average aspect ratio of 7, an average particle size in the long-axis direction of 200 nm and an average particle size in the short-axis direction of 30 nm, and the average agglomerated particle size of the silica-alumina composite particles was 70 nm. Further, the content of water was 2,230 parts by mass per 100 parts by mass of the total solid content in the obtained inorganic coating composition.

### EXAMPLE 4

An operation was carried out in the same manner as in Example 1 except that an alumina sol (Trade Name: Alumina Sol 100, manufactured by Nissan Chemical Industries, Ltd., amorphous, particle shape: feather-shape, average aspect ratio: 10, average particle size in the long-axis direction: 100 nm, average particle size in the short-axis direction: 10 nm, Al₂O₃ concentration: 10.4%, pH: 3.8, Cl concentration: 3%) was used, and 5 g of the same ion exchange resin as used in Example 1, was used, to obtain an alumina sol B (pH 5.5, Cl concentration: 0.8, content of chlorine ions per 100 parts by mass of alumina: 13 parts by mass).

An operation was carried out in the same manner as in Example 1 except that instead of the alumina sol A, the alumina sol B was used, to obtain an inorganic coating composition. In the obtained inorganic coating composition, the agglomerated particles of alumina particles had an average aspect ratio of 8, an average particle size in the long-axis direction of 250 nm and an average particle size in the short-axis direction of 30 nm, and the average agglomerated particle size of the silica-alumina composite particles was 70 nm. Further, per 100 parts by mass of the total solid content in the obtained inorganic coating composition, the contents of the alumina particles, the silica-alumina composite particles and water were 50 parts by mass, 50 parts by mass and 1,570 parts by mass respectively.

### EXAMPLE 5 (Comparative Example)

In Example 1, water was added to an alumina sol (Trade Name: Alumina Sol 520, manufactured by Nissan Chemical Industries, Ltd., boehmite, particle shape: plate-shape, average aspect ratio: 2, average particle size in the long-axis direction: 20 nm, average particle size in the short-axis direction: 10 nm, Al₂O₃ concentration: 20.5, pH 4, NO₃ concentration: 0.49%) to obtain an alumina sol C having a solid content concentration of 6% (pH 3.9, nitric acid concentration: 0.1%, content of nitric acid ions per 100 parts by mass of alumina: 2.4 parts by mass).

An operation was carried out in the same manner as in Example 1 except that instead of alumina sol A, the alumina sol C was used, to obtain an inorganic coating composition. In the obtained inorganic coating composition, the agglomerated particles of alumina particles had an average aspect ratio of 2, an average particle size in the long-axis direction of 20 nm and an average particle size in the short-axis direction of 10 nm, and the average agglomerated particle size of the silica-alumina composite particles was 70 nm. Further, per 100 parts by mass of the total solid content in the obtained inorganic coating composition, the contents of the alumina particles, the silica-alumina composite particles and water were 50 parts by mass, 50 parts by mass and 1,570 parts by mass, respectively.

### EXAMPLE 6 (Comparative Example)

In Example 1, water was added to an alumina sol (Trade Name: Alumina Sol AS-2, manufactured by Catalysts & Chemicals Industries Co., Ltd., pseudo boehmite, particle shape: plate-shape, average aspect ratio: 1.5, average particle size in the long-axis direction: 30 nm, average particle size in the short-axis direction: 20 nm, Al₂O₃ concentration: 10.2%, pH 2.6, NO₃ concentration: 0.5%) to obtain an alumina sol D having a solid content concentration of 6% (pH 3.5, concentration of nitric acid ions: 0.2%, content of nitric acid ions per 100 parts by mass of alumina: 3 parts by mass).

An operation was carried out in the same manner as in Example 1 except that instead of the alumina sol A, the alumina sol D was used, to obtain an inorganic coating composition. In the obtained inorganic coating composition, the agglomerated particles of alumina particles had an average aspect ratio of 1.5, an average particle size in the long-axis direction of 30 nm and an average particle size in the short-axis direction of 20 nm, and the average agglomerated particle size of the silica-alumina composite particles was 70 nm. Further, per 100 parts by mass of the total solid content in the obtained inorganic coating composition, the contents of the alumina particles, the silica-alumina composite particles and water were 50 parts by mass, 50 parts by mass and 1,570 parts by mass, respectively.

### EXAMPLE 7

In Example 1, the alumina sol was not treated with the ion exchange resin, and water was added thereto to obtain an alumina sol F having a solid content concentration of 6% (pH 4.9, CH₃COOH concentration: 1.7%, content of acetic acid ions per 100 parts by mass of alumina-particles: 28 parts by mass).

An operation was carried out in the same manner as in Example 1 except that instead of the alumina sol A, the alumina sol F was used, to obtain an inorganic coating composition.

### EXAMPLE 8

72.4 g of water was added to 119.3 g of a silica sol (Trade Name: Cataloid SI-40, manufactured by Catalysts & Chemicals Industries Co., Ltd., SiO₂ concentration: 40.4%, Na₂O concentration: 0.4%), and the temperature was raised to 80°C with stirring. Thereafter, 7.67 g of the same polyaluminum chloride aqueous solution as in Example 1 was gradually added and mixed at a rate of 9 g/min. The mixed Al/Si atomic ratio was 0.04. After completion of the addition, stirring was continued for one hour while the temperature was maintained at 80°C, and then water was added to obtain a silica-alumina composite sol b having a solid content concentration of 6 mass%. The average agglomerated particle size of particles in the obtained silica-alumina composite sol b was 129 nm.

An operation was carried out in the same manner as in Example 1 except that instead of the silica-alumina composite sol a, the silica-alumina composite sol b was used to obtain an inorganic coating composition. In the obtained inorganic coating composition, the agglomerated particles of alumina particles had an average aspect ratio of 7, an average particle size in the long-axis direction of 200 nm and an average particle size in the short-axis direction of 30 nm, and the average agglomerated particle size of the silica-alumina composite particles was 130 nm. Further, per 100 parts by mass of the total solid content in the obtained inorganic coating composition, the contents of the alumina particles, the silica-alumina composite particles and water were 50 parts by mass, 50 parts by mass and 1,570 parts by mass, respectively.

### EXAMPLE 9

In Example 8, at the time of obtaining the silica-alumina composite sol b, prior to adding water for dilution to a solid content concentration of 6%, ultra sonic dispersion treatment was carried out to bring the average agglomerated particle size to 70 nm, and otherwise, an operation was carried out in the same manner to obtain a silica-alumina composite sol c. An operation was carried out in the same manner as in Example 1 except that the silica-alumina composite sol c was used, to obtain an inorganic coating composition.

### EXAMPLE 10

Water was added to a silica-alumina composite sol (Trade Name: SNOWTEX AK, manufactured by Nissan Chemical Industries; Ltd., average agglomerated particle size: 30 nm, SiO₂ concentration: 17.7%, Al/Si atomic ratio: 0.14) to obtain a silica-alumina composite sol d having a solid content concentration of 6%.

An operation was carried out in the same manner as in Example 1 except that instead of the silica-alumina composite sol a, the silica-alumina composite sol d was used, to obtain an inorganic coating composition. In the obtained inorganic coating composition, the agglomerated particles of alumina-particles had an average aspect ratio of 7, an average particle size in the long-axis direction of 200 nm and an average particle size in the short-axis direction of 30 nm, and the average agglomerated particle size of the silica-alumina composite particles was 50 nm. Further, per 100 parts by mass of the total solid content in the obtained inorganic coating composition, the contents of the alumina particles, the silica-alumina composite particles and water were 50 parts by mass, 50 parts by mass and 1,570 parts by mass, respectively.

### EXAMPLE 11

Water was added to silica-alumina composite sol (Trade Name: SNOWTEX AK-L, manufactured by Nissan Chemical Industries, Ltd., average agglomerated particle size: 100 nm, SiO₂ concentration: 20.6%, Al/Si atomic ratio: 0.04) to obtain a silica-alumina composite sol e having a solid content concentration of 6%.

An operation was carried out in the same manner as in Example 1 except that instead of the silica-alumina composite sol a, the silica-alumina composite sol e was used to obtain an inorganic coating composition. In the obtained inorganic coating composition, the agglomerated particles of alumina particles had an average aspect ratio of 7, an average particle size in the long-axis direction of 200 nm and an average particle size in the short-axis direction of 30 nm, and the average agglomerated particle size of the silica-alumina composite particles was 100 nm. Further, per 100 parts by mass of the total solid content in the obtained inorganic coating composition, the contents of the alumina particles, the silica-alumina composite particles and water were 50 parts by mass, 50 parts by mass and 1,570 parts by mass, respectively.

### EXAMPLE 12 (Comparative Example)

Water was added to a silica sol (Trade Name: Cataloid SN, manufactured by Catalysts & Chemicals Industries Co., Ltd., average agglomerated particle size: 14 nm, SiO₂ concentration: 20%) to obtain a silica sol f having a solid content concentration of 6%.

An operation was carried out in the same manner as in Example 1 except that instead of the silica-alumina composite sol a, the silica sol f was used, to obtain an inorganic coating composition, whereby particles were agglomerated one another and sedimented, whereby it was impossible to form a coating.

### EXAMPLE 13 (Comparative Example)

Methanol was added to a silica sol (Trade Name: OSCAL1432, manufactured by Catalysts & Chemicals Industries Co., Ltd., isopropanol dispersion sol, average agglomerated particle size: 20 nm, SiO₂ concentration: 30%) to obtain a silica sol g having a solid content concentration of 6%.

An operation was carried out in the same manner as in Example 1 expect that instead of silica-alumina composite sol a, the silica sol g was used, to obtain inorganic coating composition, whereby the particles were agglomerated to one another and sedimented, and it was impossible to form a coating.

### EXAMPLE 14

An operation was carried out in the same manner as in Example 1 except that the amount of the surfactant was changed so that it would be 10 parts by mass per 100 parts by mass of the total solid content in the inorganic coating composition, to obtain an inorganic coating composition.

### EXAMPLE 15

An operation was carried out in the same manner as in Example 1 except that instead of 25 g of the alumina sol A, 17.5 g of alumina sol A and 7.5 g of the alumina sol D were used as mixed, to obtain an inorganic coating composition. In the obtained inorganic coating composition, the agglomerated particles of alumina particles derived from the alumina sol A had an average aspect ratio of 7, an average particle size in the long-axis direction of 200 nm and an average particle size in the short-axis direction of 30 nm, and the agglomerated particles of alumina particles derived from the alumina sol D had an average aspect ratio of 1.5, an average particle size in the long-axis direction of 30 nm and an average particle size in the short-axis direction of 20 nm, and the average agglomerated particle size of the silica-alumina composite particles was 70 nm. Further, per 100 parts by mass of the total solid content in the obtained inorganic coating composition, the contents of the alumina particles derived from the alumina sol A, the silica-alumina composite particles and water were 35 parts by mass, 50 parts by mass and 1,570 parts by mass, respectively. Further, the content of the alumina particles derived from the alumina sol D was 15 parts by mass.

### EXAMPLE 16

An operation was carried out in the same manner as in Example 1, except that 15 g of the alumina sol A and 35 g of the silica-alumina composite sol a were used, to obtain an inorganic coating composition. In the obtained inorganic coating composition, the agglomerated particles of alumina particles had an average aspect ratio of 7, an average particle size in the long-axis direction of 200 nm and an average particle size in the short-axis direction of 30 nm, and the average agglomerated particle size of the silica-alumina composite particles was 70 nm. Further, per 100 parts by mass of the total solid content in the obtained inorganic coating composition, the contents of the alumina particles, the silica-alumina composite particles and water were 30 parts by mass, 70 parts by mass and 1,570 parts by mass, respectively.

### EXAMPLE 17

An operation was carried out in the same manner as in Example 1 except that 40 g of the alumina sol A and 10 g of the silica-alumina composite sol a were used to obtain an inorganic coating composition. In the obtained inorganic coating composition, the agglomerated particles of alumina particles had an average aspect ratio of 7, an average particle size in the long-axis direction of 200 nm and an average particle size in the short-axis direction of 30 nm, and the average agglomerated particle size of the silica-alumina composite particles was 70 nm. Further, per 100 parts by mass of the total solid content in the obtained inorganic coating composition, the contents of the alumina particles, the silica-alumina composite particles and water were 80 parts by mass, 20 parts by mass and 1,570 parts by mass, respectively.

### EXAMPLE 18

An operation was carried out in the same manner as in Example 1, except that no surfactant was used, to obtain an inorganic coating composition.

### EXAMPLE 19

To 22.6 g of 2-propanol, 3.8 g of tetramethoxysilane and 3.6 g of an aqueous solution containing 1% of nitric acid, were added, followed by stirring at 25°C for one hour, to obtain a liquid containing a silica oligomer (a solid content concentration calculated as SiO₂: 5%).

16.7 g of distilled water and 25 g of ethanol were mixed, and then 52.3 g of the same alumina sol as in Example 1 and 6 g of the liquid containing the silica oligomer, were mixed thereto. Then, the same surfactant as in Example 1 was added so that it would be 3 parts by mass per 100 parts by mass of the total solid content in the inorganic coating composition, to obtain an alumina sol X having a solid content concentration of 6%.

An operation was carried out in the same manner as in Example 1 except that instead of the alumina sol A, the alumina sol X was used, to obtain an inorganic coating composition. In the obtained inorganic coating composition, the agglomerated particles of alumina particles had an average aspect ratio of 7, an average particle size in the long-axis direction of 20 nm and an average particle size in the short-axis direction of 30 nm, and the average agglomerated particle size of the silica-alumina composite particles was 70 nm. Further, per 100 parts by mass of the total solid content in the obtained inorganic coating composition, the contents of the alumina particles, the silica-alumina composite particles and water were 50 parts by mass, 50 parts by mass and 850 parts by mass, respectively.

### EXAMPLE 20

Water is added to a polyvinyl alcohol (Trade Name: POVAL 124, manufactured by KURARAY CO., LTD.) to obtain a polyvinyl alcohol aqueous solution having a solid content concentration of 3%.

To 100 parts by mass of the inorganic coating composition obtained in Example 1, 5 parts by mass of the polyvinyl alcohol aqueous solution is added and mixed to obtain an inorganic coating composition having a solid content concentration of 3%. In the obtained inorganic coating composition, the agglomerated particles of alumina particles have an average aspect ratio of 7, an average particle size in the long-axis direction of 200 nm and an average particle size in the short-axis direction of 30 nm, and the average agglomerated particle size of the silica-alumina composite particles is 70 nm. Further, per 100 parts by mass of the total solid content in the obtained organic coating composition, the contents of the alumina particles, the silica-alumina composite particles and water are 48 parts by mass, 48 parts by mass and 1,730 parts by mass, respectively.

### EXAMPLE 21

An operation is carried out in the same manner as in Example 20 except that instead of the polyvinyl alcohol, a polyacrylic acid (Trade Name: JURYMER APO-601N, manufactured by Nihonjunyaku Co., Ltd.) is used, to obtain an inorganic coating composition. In the obtained inorganic coating composition, the agglomerated particles of alumina particles have an average aspect ratio of 7, an average particle size in the long-axis direction of 200 nm and an average particle size in the short-axis direction of 30 nm, and the average agglomerated particle size of the silica-alumina composite particles is 70 nm.

### EXAMPLE 22

Water is mixed to a tin oxide sol (Trade Name: C-10, manufactured by TAKI CHEMICAL CO., LTD., SnO₂ concentration: 10%) to obtain a tin oxide sol having a solid content concentration of 3%.

To 100 parts by mass of the inorganic coating composition obtained in Example 1, the tin oxide sol is mixed in a proportion of 25 parts by mass to obtain an inorganic coating composition having a solid content concentration of 3%. A coating obtained by using this inorganic coating composition is found to have electro conductivity. Further, in the obtained inorganic coating composition, the agglomerated particles of alumina particle have an average aspect ratio of 7, an average particle size in the long-axis direction of 200 nm and an average particle size in the short-axis direction of 30 nm, and the average agglomerated particle size of the silica-alumina composite particles is 70 nm. Further, per 100 parts by mass of the total solid content in the obtained inorganic coating composition, the contents of the alumina particles, the silica-alumina composite particles and water are 40 parts by mass, 40 parts by mass and 1,900 parts by mass, respectively. Further, the content of tin oxide is 25 parts by mass per 100 parts by mass of the solid content of the inorganic coating composition.

### EXAMPLE 23

7 g of the alumina sol D obtained in Example 6 and 3 g of the silica-sol g obtained in Example 13, are mixed and then stirred at room temperature for one hour to obtain a mixed sol having alumina particles and silica particles mixed.

An operation is carried out in the same manner as in Example 1 except that instead of the obtained inorganic coating composition, 7 g of the inorganic coating composition obtained in Example 1 and 3 g of the mixed sol are used as mixed, to obtain an inorganic coating composition. In the obtained inorganic coating composition, the particle sizes of the alumina particles, the silica-alumina composite particles and the silica particles are such that the alumina particles derived from the alumina sol A have an average aspect ratio of 7, an average particle size in the long-axis direction of 200 nm and an average particle size in the short-axis direction of 30 nm, and the alumina particles derived from the alumina sol D have an average aspect ratio of 1.5, an average particle size in the long-axis direction of 30 nm and an average particle size in the short-axis direction of 20 nm, the silica-alumina composite particles are 70 nm, and the silica particles derived from the silica sol g are 20 nm. Further, in the obtained inorganic coating composition, the contents of the alumina particles derived from the alumina sol A, the silica-alumina composite particles, the alumina particles derived from the alumina sol D, the silica particles and water, are 35 parts by mass, 35 parts by mass, 21 parts by mass, 9 parts by mass and 2,450 parts by mass, respectively, per 100 parts by mass of the total solid content.

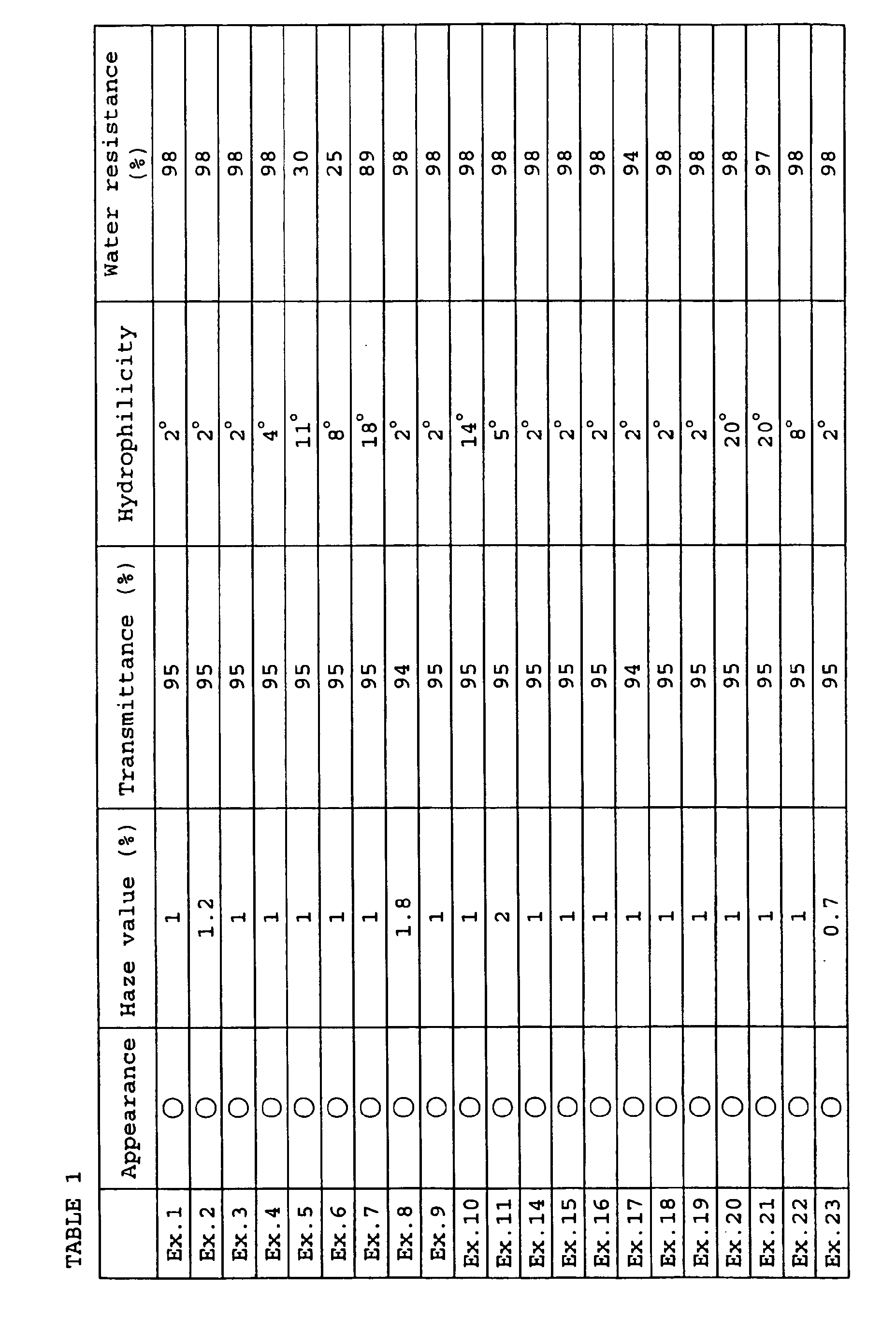

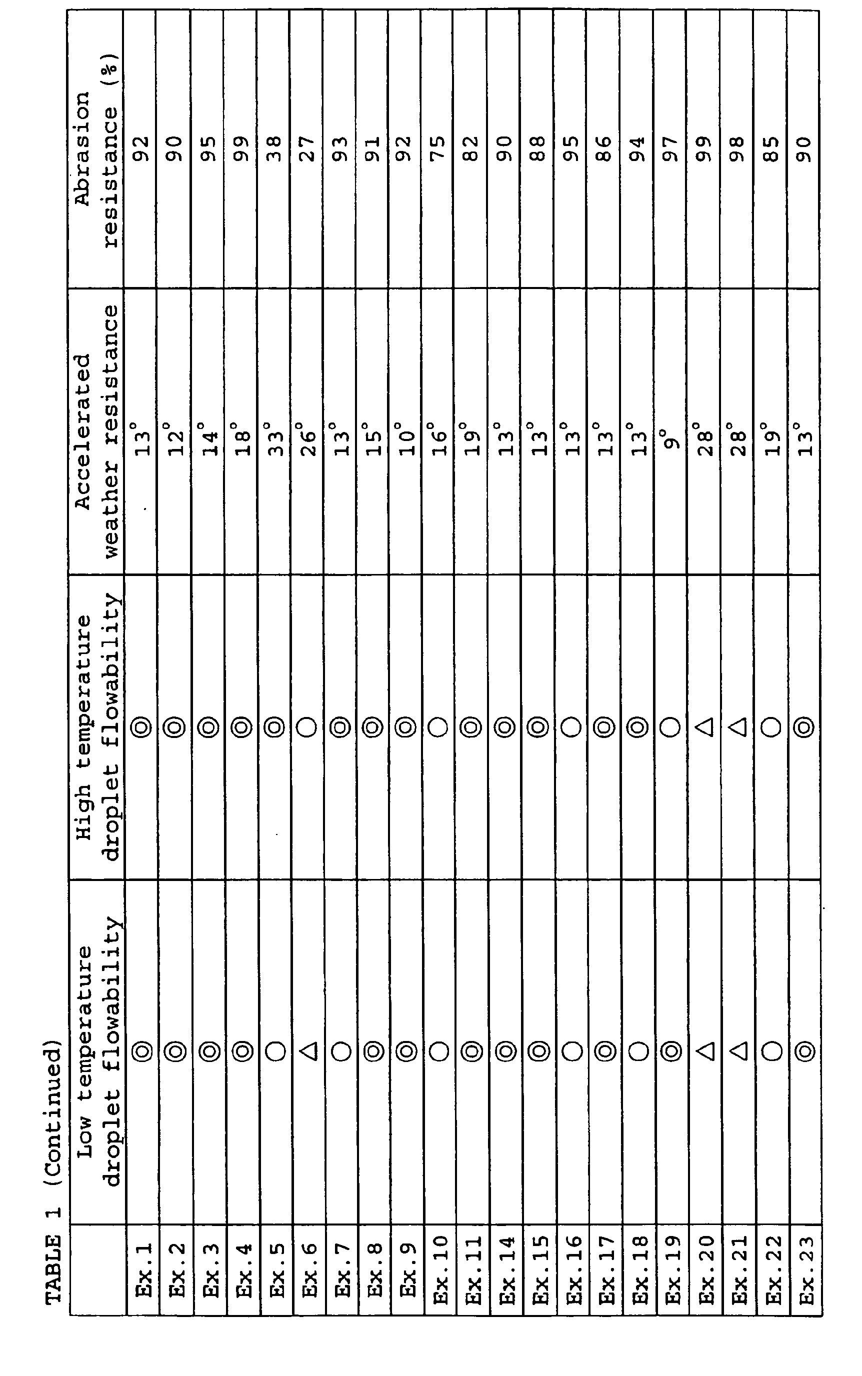

### INDUSTRIAL APPLICABILITY

By using the inorganic coating composition of the present invention, it is possible to impart a hydrophilic coating to various articles, such as covers for various lamps, lenses for eyeglasses, goggles, covers for various meters and agricultural films.

## Claims

1. An inorganic coating composition capable of forming a hydrophilic coating on a substrate, which comprises alumina particles, of which agglomerated particles in a dispersing medium have an average aspect ratio of from 3 to 20, and have an average particle size in the long axis direction of from 100 to 500 nm and an average particle size in the short axis direction of from 2 to 100 nm, silica-alumina composite particles, of which agglomerated particles in a dispersing medium have an average particle size of at most 150 nm, and water, and which has a solid content concentration of from 0.1 to 30 mass%.

2. The inorganic coating composition according to Claim 1, wherein the Al/Si atomic ratio in the silica-alumina composite particles is from 0.001 to 0.1.

3. The inorganic coating composition according to Claim 1 or 2, wherein the alumina particles are amorphous.

4. The inorganic coating composition according to any one of Claims 1 to 3, wherein per 100 parts by mass of the total solid content in the inorganic coating composition, the alumina particles are from 20 to 80 parts by mass, and the silica-alumina composite particles are from 20 to 80 parts by mass.

5. The inorganic coating composition according to any one of Claims 1 to 4, which further contains silica particles.

6. The inorganic coating composition according to any one of Claims 1 to 5, which further contains a nonionic surfactant.

7. A hydrophilic coating obtained by coating a substrate with the inorganic coating composition as defined in any one of Claims 1 to 6.

8. The hydrophilic coating according to Claim 7, which has a contact angle to water of not more than 30°.

9. The hydrophilic coating according to Claim 7 or 8, wherein the substrate is a fluorocarbon resin film.

10. An agricultural film having the hydrophilic coating as defined in any one of Claims 7 to 9.

## Patentansprüche

1. Anorganische Beschichtungszusammensetzung, fähig zum Bilden einer hydrophilen Beschichtung auf einem Substrat, welche Aluminiumoxidteilchen, von denen agglomerierte Teilchen in einem Dispersionsmedium ein durchschnittliches Aspektverhältnis von 3 bis 20 aufweisen und eine durchschnittliche Teilchengröße in der Langachsenrichtung von 100 bis 500 nm und eine durchschnittliche Teilchengröße in der Kurzachsenrichtung von 2 bis 100 nm aufweisen, Siliciumdioxid-Aluminiumoxid-Kompositteilchen, von denen agglomerierte Teilchen in einem Dispersionsmedium eine durchschnittliche Teilchengröße von höchstens 150 nm aufweisen, und Wasser umfasst, und welche eine Feststoffgehaltskonzentration von 0,1 bis 30 Massen-% aufweist.

2. Anorganische Beschichtungszusammensetzung nach Anspruch 1, wobei das Al/Si-Atomverhältnis in den Siliciumdioxid-Aluminiumoxid-Kompositteilchen von 0,001 bis 0,1 beträgt.

3. Anorganische Beschichtungszusammensetzung nach Anspruch 1 oder 2, wobei die Aluminiumoxidteilchen amorph sind.

4. Anorganische Beschichtungszusammensetzung nach einem der Ansprüche 1 bis 3, wobei pro 100 Massenteile des Gesamtfeststoffgehalts in der anorganischen Beschichtungszusammensetzung die Aluminiumoxidteilchen von 20 bis 80 Massenteile betragen und die Siliciumdioxid-Aluminiumoxid-Kompositteilchen von 20 bis 80 Massenteile betragen.

5. Anorganische Beschichtungszusammensetzung nach einem der Ansprüche 1 bis 4, welche weiter Siliciumdioxidteilchen enthält.

6. Anorganische Beschichtungszusammensetzung nach einem der Ansprüche 1 bis 5, welche weiter ein nicht-ionisches grenzflächenaktives Mittel enthält.

7. Hydrophile Beschichtung, erhalten durch Beschichten eines Substrats mit der anorganischen Beschichtungszusammensetzung nach einem der Ansprüche 1 bis 6.

8. Hydrophile Beschichtung nach Anspruch 7, welche einen Kontaktwinkel zu Wasser von nicht mehr als 30° aufweist.

9. Hydrophile Beschichtung nach Anspruch 7 oder 8, wobei das Substrat eine Fluorkohlenstoff-Harzfolie ist.

10. Landwirtschaftliche Folie mit der hydrophilen Beschichtung nach einem der Ansprüche 7 bis 9.

## Revendications

1. Composition de revêtement inorganique capable de former un revêtement hydrophile sur un substrat, qui comprend des particules d'alumine, dont les particules agglomérées dans un milieu de dispersion ont un rapport d'aspect moyen de 3 à 20 et ont une taille particulaire moyenne dans la direction de l'axe long de 100 à 500nm et une taille particulaire moyenne dans la direction de l'axe court de 2 à 100 nm, des particules composites de silice-alumine, dont les particules agglomérées dans un milieu de dispersion ont une taille particulaire moyenne au maximum de 150 nm, et de l'eau et qui a une concentration de teneur en solides de 0,1 à 30% en masse.

2. Composition de revêtement inorganique selon la revendication 1, dans laquelle le rapport atomique Al/Si dans les particules composites de silice-alumine est de 0,001 à 0,1.

3. Composition de revêtement inorganique selon la revendication 1 ou 2, dans laquelle les particules d'alumine sont amorphes.

4. Composition de revêtement inorganique selon l'une quelconque des revendications 1 à 3, dans laquelle, pour 100 parties en masse de la teneur totale en solides de la composition de revêtement inorganique, les particules d'alumine représentent 20 à 80 parties en masse et les particules composites de silice-alumine représentent 20 à 80 parties en masse.

5. Composition de revêtement inorganique selon l'une quelconque des revendications 1 à 4, qui contient en outre des particules de silice.

6. Composition de revêtement inorganique selon l'une quelconque des revendications 1 à 5, qui contient en outre un tensioactif non ionique.

7. Revêtement hydrophile obtenu en appliquant sur un substrat la composition de revêtement inorganique selon l'une quelconque des revendications 1 à 6.

8. Revêtement hydrophile selon la revendication 7, qui a un angle de contact avec l'eau qui ne dépasse pas 30°.

9. Revêtement hydrophile selon la revendication 7 ou 8, dans lequel le substrat est un film de résine fluorocarbonée.

10. Film agricole ayant le revêtement hydrophile selon l'une quelconque des revendications 7 à 9.
